# EUROPÄISCHE PATENTSCHRIFT

(11) **EP 3 184 971 B1**
(45) Veröffentlichungstag und Bekanntmachung des Hinweises auf die Patenterteilung: **05.12.2018**
(21) Anmeldenummer: 15201571.5
(22) Anmeldetag: 21.12.2015
(51) Int. Cl.: G01F 11/00, G01F 11/28, A61J 3/02, B65B 1/36, B65B 1/16

(54) **KLEINSTMENGEN-DOSIERVORRICHTUNG, INSBESONDERE FÜR PHARMAZEUTISCHE ANWENDUNGEN SOWIE KLEINSTMENGEN-PULVERDOSIERVERFAHREN**
MINUTE QUANTITY DOSING DEVICE, IN PARTICULAR FOR PHARMACEUTICAL APPLICATIONS AND MINUTE QUANTITY POWDER DOSING METHOD
DISPOSITIF DE DOSAGE DE PETITES QUANTITES, EN PARTICULIER POUR DES APPLICATIONS PHARMACEUTIQUES ET PROCEDE DE DOSAGE DE POUDRE DE PETITES QUANTITES

(43) Veröffentlichungstag der Anmeldung: 28.06.2017
(73) Patentinhaber: Fydec Holding SA, 1024 Ecublens (CH)
(72) Erfinder: DIETRICH, Frederic, 1054 Morrens (CH)
(74) Vertreter: Patentanwälte Behrmann Wagner PartG mbB

(56) Entgegenhaltungen:
- EP-A1- 2 281 683
- EP-A1- 2 674 364
- DE-A1- 3 040 659
- DE-A1-102007 044 753
- DE-U1-202013 004 663
- US-A- 4 709 837

## Beschreibung

Die Erfindung betrifft eine Kleinstmengen-Pulverdosiervorrichtung, insbesondere für pharmazeutische oder chemische Anwendungen, gemäß dem Oberbegriff des Anspruchs 1 zum Dosieren von Pulvervolumina von kleiner als 1cm³, bevorzugt kleiner als 150mm³, umfassend eine von einer Umfangswand begrenzte Dosierkammer, die zum Befüllen der Dosierkammer mit zu dosierendem Pulver mit einer Unterdruckquelle zum Ansaugen des Pulvers verbindbar ist, wobei der Dosierkammer Filtermittel zum Zurückhalten von Pulver in der Dosierkammer (und dadurch Verhindern eines Einsaugens in die Vakuumquelle) bei einem Ansaugvorgang, d.h. beim Befüllen, zugeordnet sind. Die Umfangswand begrenzt dabei die Dosierkammer bevorzugt in radialer Richtung nach außen, insbesondere bezogen auf eine sich bevorzugt senkrecht zu einer Dosierkammerbefüll- und/oder Entleerungsöffnung erstreckende und/oder mit einer später noch zu erläuternden Verstellachse eines bevorzugt vorgesehenen Auswurfstempels zusammenfallende, bevorzugt vertikale, Dosierkammerachse.
Ferner betrifft die Erfindung ein Kleinstmengen-Dosierverfahren gemäß dem Oberbegriff des Anspruchs 12 für Pulver, insbesondere mit einem mittleren Partikelgrößendurchmesser x_{50,3} < 50µm. Bevorzugt handelt es sich um Pharmazeutika oder chemische Substanzen. Besonders bevorzugt wird das Verfahren unter Verwendung einer erfindungsgemäßen Kleinstmengen-Dosiervorrichtung durchgeführt. Ebenfalls benötigt das Verfahren eine Dosierkammer für zu dosierendes Pulver, wobei die Dosierkammer mit zu dosierendem Pulver befüllt wird, indem die Dosierkammer mit Unterdruck beaufschlagt wird, wobei die Unterdruckbeaufschlagung durch Filtermittel hindurch erfolgt, um mit diesen den größten Teil des bei einem Dosiervorgang angesaugten Pulvers in der Dosierkammer zurückzuhalten.

Aus der EP 2 652 451 B1 ist eine Pulverdosiervorrichtung bekannt, bei der eine von einer Umfangswand begrenzte Dosierkammer mit zu dosierendem Pulver befüllt wird, indem die Dosierkammer durch eine Filtermembran mit Unterdruck beaufschlagt wird. Diese bekannte Pulverdosiervorrichtung ist gegenüber anderen, bis dahin bekannten Pulverdosiervorrichtungen sehr fortschrittlich, da die Dosierkammer durch ein und dieselbe Öffnung befüllt und entleert wird - bei älteren Dosiervorrichtungen wurde das zu dosierende Pulver durch eine seitliche Befüllöffnung angesaugt und nach unten durch Druckbeaufschlagung entleert.

Die bekannte Technologie stößt bei Kleinstpulvermengen bzw. -volumina an ihre Grenze, da mit sinkendem Dosierkammervolumen auch die zur Verfügung stehende Filteroberfläche theoretisch so weit abnimmt, dass sich solch kleine, in der Regel gitterförmige, Filtermembrane kaum noch oder nicht mehr fertigen lassen. Darüber hinaus sinkt auch die Porosität, d.h. der maximal mögliche Durchfluss durch eine derartig kleine Filtermembran, bis auf sehr kleine Werte, in denen der Transfer von Gas, d.h. ein Absaugen von Gas, durch die Filtermembran sehr problematisch wird und somit eine sichere und insbesondere, vollständige Füllung der Dosierkammer nicht mehr sichergestellt werden kann. Darüber hinaus sind sehr kleine Filtermembrane, wie diese für hier interessierende Kleinstmengen benötigt würden, sehr zerbrechlich und nur schwer abdichtbar.

Es wird nach Lösungen gesucht, um die vorstehenden Probleme zu beseitigen, insbesondere vor dem Hintergrund zunehmender Bestrebungen zu einer individualisierten Dosierung aktiver Wirkstoffbestandteile (API) von Medikamenten. Die bisherige Vorgehensweise einer großtechnischen Dosierung besteht darin, dass der aktive Wirkstoff zunächst mit einem Trägermaterial gemischt und dann gemeinsam in größeren Dosiervolumina dosiert wird.

Das Problem hierbei liegt jedoch in der vergleichsweise inhomogenen Mischung begründet und der fehlenden Möglichkeit einer individualisierten, d.h. patientenspezifischen Dosierung. Es soll daher eine Dosiervorrichtung sowie ein Dosierverfahren angegeben werden, was diesen Anforderungen gerecht wird und eine entsprechende Dosierung von Kleinstmengen (von aktiven Wirkstoffen) bevorzugt zu einem Trägermaterial ermöglicht.

Aus der US 4,709,837 A ist eine Dosiervorrichtung bekannt, bei der die Dosierkammer axial von einem die Ansaugöffnungen aufweisenden Filterelement begrenzt ist.

Die EP 2 674 364 A1 beschreibt eine Dosiervorrichtung bei der in dem Ausführungsbeispiel gemäß Fig. 4 eine seitliche Ansaugöffnung vorgesehen ist, der im Inneren der Dosierkammer ein Filterelement zugeordnet ist, um Pulver vor der Ansaugöffnung zurückzuhalten.

Ausgehend von dem vorgenannten Stand der Technik liegt der Erfindung die Aufgabe zugrunde, eine Kleinstmengen-Pulverdosiervorrichtung, insbesondere für pharmazeutische oder chemische Anwendungen anzugeben, mit der automatisiert Pulvervolumina von weniger als 1cm³, noch weiter bevorzugt weniger als 500mm³, ganz besonders bevorzugt von weniger als 200mm³ oder noch weniger dosierbar sind und dabei eine vollständige Befüllung der Dosierkammer sicherstellt sowie Filterprobleme hinsichtlich Durchflussmenge und Robustheit sicher vermieden werden. Ferner besteht die Aufgabe darin, ein entsprechend verbessertes Kleinstmengen-Pulverdosierverfahren anzugeben.
Diese Aufgabe wird hinsichtlich der Kleinstmengen-Pulverdosiervorrichtung mit den Merkmalen des Anspruchs 1 gelöst, d.h. bei einer gattungsgemäßen Kleinstmengen-Pulverdosiervorrichtung dadurch, dass die Filtermittel, die von der Umfangswand gebildet werden, in der Umfangswand ausgebildete Ansaugöffnungen zum Zurückhalten des Pulvers in der Dosierkammer umfassen, durch die hindurch die Dosierkammer mit Unterdruck beaufschlagbar ist.
Hinsichtlich des Verfahrens wird die Aufgabe mit den Merkmalen des Anspruchs 12 gelöst, d.h. bei einem gattungsgemäßen Verfahren dadurch, dass die Filtermittel, die von der Umfangswand gebildet werden, in der Umfangswand ausgebildete Ansaugöffnungen umfassen, durch die hindurch die Dosierkammer mit Unterdruck beaufschlagt wird, insbesondere derart, dass dabei mittels der mindestens einen Ansaugöffnung, bevorzugt sämtlicher Ansaugöffnungen, mindestens 90 Gew-%, bevorzugt mindestens 95 Gew-%, noch weiter bevorzugt mindestens 99 Gew-% der bei einem Befüllvorgang angesaugten Pulverpartikel in der Dosierkammer zurückgehalten werden.
Vorteilhafte Weiterbildungen der Erfindung sind in den Unteransprüchen angegeben. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, unter Verzicht auf ein von der Umfangswand der Dosierkammer separates und/oder die Dosierkammer axial begrenzendes Filterelement, insbesondere Filtergewebe, in der die Dosierkammer begrenzenden Umfangswand Ansaugöffnungen, d.h. Durchgangskanäle bzw. Durchbrüche, vorzusehen, durch welche hindurch die Dosierkammer mit Unterdruck beaufschlagbar ist bzw. wird und mit denen bevorzugt ein Großteil des angesaugten Pulvers bei einem Befüll- bzw. Ansaugvorgang in der Dosierkammer zurückhaltbar ist bzw. gehalten wird. Anders ausgedrückt werden die Filtermittel in die Umfangswand verlegt bzw. von dieser gebildet, indem in der Umfangswand Ansaugöffnungen vorgesehen werden bzw. sind, durch die hindurch Gas, insbesondere Luft, aus der Dosierkammer zum Füllen der Dosierkammer durch eine Befüllöffnung hindurch absaugbar ist, wobei die Ansaugöffnungen so gestaltet sind, d.h. eine so geringe lichte Weite aufweisen, dass diese die gewünschte Filterfunktion erfüllen. Wie später noch erläutert werden wird, gibt es im Hinblick auf die konkrete geometrische Ausgestaltung Ansaugöffnungen und die Anzahl der vorzusehenden Ansaugöffnungen unterschiedliche Realisierungsmöglichkeiten. Ganz besonders bevorzugt ist es im Hinblick auf eine einfache bzw. optimierte Fertigbarkeit bei gleichzeitiger Gewährleistung eines ausreichend großen Gasdurchflusses die Ansaugöffnungen jeweils als Ansaugschlitz auszubilden, der bevorzugt eine wesentlich größere Längen- als Breitenerstreckung (bevorzugt jeweils gemessen senkrecht zur Tiefenerstreckung bzw. Durchströmungsrichtung) hat, wobei es ganz besonders bevorzugt ist, wenn die Breitenerstreckung so gewählt wird, dass diese der limitierende Filtrationsfaktor ist. Besonders bevorzugt beträgt eine senkrecht zur Schlitzlängserstreckung gemessene Spaltbreite weniger als 50µm, ganz besonders bevorzugt weniger als 30µm, wobei bevorzugt die konkrete Schlitzbreite in Abhängigkeit der Partikelgrößenverteilung und Art des zu dosierenden Pulvers gewählt wird. So ist es beispielsweise bei klebenden Pulvern möglich, eine Breite oder allgemein eine in einer Dimension gemessene lichte Weite einer Querschnittsfläche der Ansaugöffnungen an einer oberen Grenze anzusiedeln, während zur Dosierung nicht oder nur gering klebriger Kleinst-Partikel mit einer sehr geringen Partikelgrößenverteilung bevorzugt entsprechend geringe lichte Weiten oder Schlitzbreiten gewählt werden. Wie im Detail noch erläutert werden wird, ist die Erfindung nicht auf das Vorsehen schlitzförmiger Ansaugöffnungen beschränkt - diese können grundsätzlich alle denkbaren geometrischen Gestaltungen aufweisen, solange eine vollständige Befüllung der Dosierkammer mit zu dosierendem Pulver und ein ausreichender Rückhalt von Pulver in der Dosierkammer beim Befüllvorgang gewährleistet ist.

Ganz besonders bevorzugt sind die Ansaugöffnungen derart auf das zu filtrierende Pulver, insbesondere eine pharmazeutische aktive Wirksubstanz oder eine chemische Substanz, abgestimmt, dass mindestens 90 Gew-%, bevorzugt mindestens 95 Gew-%, noch weiter bevorzugt mindestens 99 Gew-% der bei einem Befüllvorgang angesaugten Pulverpartikel von den Ansaugöffnungen der Umfangswand in der Dosierkammer zurückgehalten werden. Ganz besonders bevorzugt ist es, wenn eine in einer Dimension gemessene lichte Weite der freien Querschnittsfläche der Ansaugöffnungen, insbesondere eine (geringste) Schlitzbreite und/oder eine (geringste) Kantenlänge oder ein minimaler Durchmesser kleiner ist als ein x_{30,3} (d_{30,3}) - Partikeldurchmesser der Partikelgrößenverteilung, ganz besonders bevorzugt kleiner ist als ein x_{20,3} (d_{20,3}) - Durchmesser oder einem x_{10,3} (d_{10,3}) - Partikelgrößendurchmesser des zu dosierenden Pulvers entspricht oder geringer ist als ein solcher. Die vorerwähnte lichte Weite muss für die gewünschten Filtrations- bzw. Rückhalteergebnisse nicht dem kleinsten Partikelgrößendurchmesser der zu dosierenden Pulverpartikel entsprechen, da beobachtet wurde, dass diese Kleinstpartikel zwischen größeren Partikeln des Partikelgemisches (Pulvergemisches) gefangen sind und sich bei einem Befüllvorgang nicht herauslösen (dense phase = Dichtestrom). Solche, hier interessierende Pulver- bzw. Partikelmischungen fließen sehr träge, vergleichbar mit sehr zähen, nicht newtonschen Fluiden. Im Rahmen einer Weiterbildung der Erfindung soll somit als offenbart gelten und beanspruchbar sein, dass die lichte Weite der Querschnittsfläche der Ansaugöffnungen größer ist bzw. sein kann als ein geringster Partikeldurchmesser bzw. als ein Partikeldurchmesser der kleinsten Partikel des zu dosierenden Pulvers.

Grundsätzlich ist es unter bestimmten Voraussetzungen möglich, die lichte Weite, insbesondere eine Schlitzbreite der Querschnittsfläche der Ansaugöffnungen so zu wählen, dass diese maximal den zehnfachen mittleren Durchmesser x_{50,3} (d_{50,3}) der zu dosierenden Partikel bzw. des zu dosierenden Pulvers entspricht. Die Wahl einer solch vergleichsweise großen lichten Weite bzw. Ansaugöffnungsbreite ist insbesondere bei stark klebrigen Pulvern, vorzugsweise pharmazeutischen Stoffen möglich. Bevorzugt ist die lichte Weite, also eine geringste Abmessung der Querschnittsfläche der Ansaugöffnungen jedoch geringer und beträgt bevorzugt maximal den fünffachen x_{50,3}-Durchmesser, noch weiter bevorzugt maximal dem doppelten x_{50,3}-Durchmesser oder entspricht dem x_{50,3}-Durchmesser oder ist ganz besonders bevorzugt geringer als ein solcher x_{50,3}-Partikeldurchmesser der zu dosierenden Partikel.

Insgesamt bringt die erfindungsgemäße Kleinstmengen-Pulverdosiervorrichtung bzw. das erfindungsgemäße Kleinstmengen-Pulverdosierverfahren erhebliche Vorteile mit sich im Vergleich mit konventionellen Anlagen, die, bevorzugt im Gegensatz zu der erfindungsgemäßen Vorrichtung und dem erfindungsgemäßen Verfahren, mit von der Umfangswand separaten, in der Regel die Dosierkammer axial begrenzenden Filterelementen arbeiten. So lassen sich in der Umfangswand vergleichsweise einfach sehr viele Ansaugöffnungen realisieren, die durch ihre, beispielsweise langgestreckte, insbesondere schlitzförmige Geometrie ausreichend Gasdurchsatz bei gleichzeitig guter Filterwirkung garantieren, insbesondere da die Umfangsfläche, insbesondere Mantelfläche, einer Dosierkammer im Vergleich mit einer sehr begrenzten axialen Fläche von, bevorzugt kreiszylindrisch konturierten, Dosierkammern viel Platz bzw. Raum für das Vorsehen entsprechend gestalteter Ansaugöffnungen bietet. Darüber hinaus steht vergleichsweise viel Material zur Verfügung, so dass trotz der guten Filtereigenschaften eine robuste Ausführung garantiert werden kann. Bevorzugt kommen im Rahmen des erfindungsgemäßen Verfahrens und/oder zur Auslegung der Ansaugöffnungen bei der erfindungsgemäßen Kleinstmengen-Pulverdosiervorrichtung pharmazeutische Pulver, insbesondere aktive Wirkstoffe oder alternativ chemische Verbindungen zum Einsatz, die eine Partikelgrößenverteilung mit einem mittleren, volumenspezifischen Partikeldurchmesser x_{50,3} von weniger als 50µm aufweisen, bevorzugt von weniger als 30 µm, ganz besonders bevorzugt von weniger als 10 µm
Ganz bevorzugt begrenzt die Umfangswand der Dosierkammer diese in radialer Richtung nach außen bezogen auf eine Dosierkammerachse, die bevorzugt vertikal angeordnet ist und/oder senkrecht steht auf einer Querschnittsfläche einer Befüll- und/oder Entleerungsöffnung der Dosierkammer und/oder die definiert wird bzw. zusammenfällt mit bzw. von einer Verstellachse eines fakultativen, bevorzugt vorgesehenen Auswurfstempels, der bevorzugt relativ zur Umfangswand zum Ausstoßen von Pulver nach einem Befüllvorgang verstellbar ist. Ganz besonders bevorzugt begrenzt die Umfangswand der Dosierkammer ein zylindrisches, insbesondere kreiszylindrisches Dosierkammervolumen, weist also eine innenzylindrische Konturierung auf und ist koaxial um die vorerwähnte, bevorzugt eine Längsmittelachse bildende, Dosierkammerachse angeordnet. Besonders zweckmäßig ist es weiterhin, wenn die Ansaugöffnungen in radialer Richtung bezogen auf die Dosierkammerachse der Umfangswand verlaufen (was jedoch nicht zwingend ist) und/oder in einem benachbart zur Dosierkammer angeordneten Ansaugraum münden, der über entsprechende Ventilmittel mit der mindestens einen Unterdruckquelle verbindbar ist.
Wie eingangs erläutert handelt es sich bei der erfindungsgemäßen Pulverdosiervorrichtung um eine Dosiervorrichtung für Kleinstmengen (Kleinstvolumina) von kleiner als 1cm³. Ganz besonders bevorzugt ist es jedoch, wenn das zu dosierende bzw. dosierbare Volumen und damit das Dosierkammervolumen noch (deutlich) geringer ist. Entsprechende, bevorzugte Dosierkammervolumina sind in Unteranspruch 2 erläutert. Dabei kann es sich um fixe, d.h. nicht manuell oder automatisch veränderbare Dosierkammervolumina handeln oder alternativ um ein veränderbares Dosierkammervolumen, welches beispielsweise über einen Volumenbegrenzungsantrieb, insbesondere mittels eines Stempels, bevorzugt des vorerwähnten Auswurf- bzw. Austragsstempels, einstellbar ist, um mit der selben Kleinstmengen-Dosiervorrichtung je nach Anwendungsfall unterschiedliche Volumina dosieren zu können. Das hier angesprochene Dosierkammervolumen ist bevorzugt das Dosierkammervolumen bei einem Befüllvorgang - das fakultative komprimierte Dosierkammervolumen, welches beispielsweise aus einem Hineinverstellen eines Auswurfstempels in die Dosierkammer zur Komprimierung des Pulvers resultiert, ist kleiner als das oben genannte Dosierkammervolumen.

Zusätzlich oder alternativ ist die Dosierkammer zur Dosierung einer Pulvermenge zwischen 0,1 mg und 5 mg, vorzugsweise zwischen 0,1 mg und 100 mg, noch weiter bevorzugt zwischen 0,1mg und 60 mg, ganz besonders bevorzugt zwischen 0,1 mg und 5 mg, noch weiter bevorzugt von 0,1 mg und 30 mg, ganz besonders bevorzugt zwischen 0,1 mg und 20 mg, noch weiter bevorzugt zwischen 0,1 mg und 1 mg, ganz besonders bevorzugt zwischen 0,1 mg und 0,5 mg, ganz besonders bevorzugt zwischen 0,1 mg und 0,4 mg, oder weniger ausgebildet bzw. wird eine solche Pulvermenge im Wege des Verfahrens dosiert.

Wie eingangs erläutert, ist es wesentlich, dass durch die Ansaugöffnungen die Dosierkammer nicht nur mit Unterdruck beaufschlagbar ist, sondern dass die Ansaugöffnungen so gestaltet sind, dass diese aufgrund dieser geometrischen Gestaltung die Filterfunktion, insbesondere trotz eines Verzichtes auf von den Ansaugöffnungen separate die Dosierkammer unmittelbar begrenzende Filterelemente, erfüllen. Hierfür ist es besonders zweckmäßig, wenn die Ansaugöffnungen eine freie Querschnittsfläche aufweisen, die bevorzugt senkrecht zu einer Achsrichtung bzw. zu einer Erstreckungsrichtung der Ansaugöffnung bzw. des Ansaugkanals gemessen ist, deren lichte Weite in zumindest einer Dimension, bevorzugt ausschließlich in einer Dimension, 50µm oder weniger beträgt. Ganz besonders bevorzugt beträgt diese lichte Weite 30µm oder weniger, noch weiter bevorzugt 20µm oder weniger. Die untere Grenze ist im Wesentlichen fertigungstechnisch bedingt und/oder abhängig von dem gewählten Dosierkammervolumen. Bevorzugt beträgt eine untere Grenze der lichten Weite 1µm oder ist bevorzugt noch geringer, ganz besonders bevorzugt 0,1µm oder weniger. Die lichte Weite ist dabei die Dimension der freien Querschnittsfläche, die für den Rückhalt der Partikel in der Dosierkammer verantwortlich ist. Je nach Geometrie der Ansaugöffnungen kann die lichte Weite beispielsweise von einer Ansaugöffnungsbreite gebildet werden, was insbesondere bei schlitzförmigen, geradlinigen oder gekrümmten Ansaugöffnungsschlitzen der Fall ist. In diesem Fall ist die lichte Weite bevorzugt die senkrecht zur Längen- und Tiefenerstreckung der Ansaugöffnungen gemessene Ansaugöffnungserstreckung. Bei eher punktuellen bzw. kreisförmigen oder vieleckigen Ansaugöffnungen kann die lichte Weite auch von einem minimalen, bevorzugt senkrecht zur Tiefenerstreckung gemessenen Ansaugöffnungsdurchmesser definiert werden oder von einer minimalen Kantenlänge, d.h. dem kleinsten, bevorzugt geradlinigen Kantenmaß eines Ansaugöffnungsrandes. Es handelt sich bei der lichten Weite um jedenfalls die die Filterstation begrenzende Größe bzw. Dimension des Ansaugöffnungsquerschnittes.
Wie bereits erläutert ist eine schlitzförmige, beispielsweise geradlinige oder alternativ auch gekrümmte oder gewendelte Querschnittsflächenkontur der Ansaugöffnungen besonders bevorzugt, wobei die vorerwähnte lichte Weite bevorzugt gemessen wird zwischen zwei gegenüberliegenden, vorzugsweise sich parallel erstreckenden Schlitzlängsrändern, also senkrecht zur Längserstreckung der Ansaugöffnungen und senkrecht zur Tiefenerstreckung. Dabei ist es besonders bevorzugt, wenn der mindestens eine Ansaugschlitz so dimensioniert ist, dass seine Längenerstreckung mindestens 100-mal, bevorzugt mindestens 1000-mal größer ist als die Schlitzbreitenerstreckung (lichte Weite).

Insbesondere bei schlitzförmig gestalteten Ansaugöffnungen hat es sich als besonders vorteilhaft herausgestellt, wenn diese sich über mindestens 50%, bevorzugt über mindestens 80% einer parallel zu einer vordefinierten Dosierkammerachse gemessenen Dosierkammerlängenerstreckung erstrecken, bevorzugt, jedoch nicht zwingend, in axialer Richtung.

Grundsätzlich lassen sich die Ansaugöffnungen durch verschiedene Technologien realisieren. So ist es beispielsweise denkbar, die Ansaugöffnung bei einem 3D-Druckverfahren der beispielsweise aus einem Metall und/oder Kunststoffgranulat bestehenden Dosierkammerumfangswand auszubilden oder alternativ durch einen Ätzprozess, insbesondere im Rahmen eines photolithographischen Herstellungsverfahrens. Denkbar ist auch eine mechanische Bearbeitung, insbesondere durch spanabhebende Verfahren oder eine Herstellung durch Erosionsverfahren, insbesondere Funkenerosionsverfahren. Auch ist es grundsätzlich möglich, die wenigstens eine Ansaugöffnung mittels eines Fluidstrahl-Bohrverfahrens oder Laserstrahl-Bohrverfahrens herzustellen.
Als besonders zweckmäßig hat sich herausgestellt, die Dosierkammerumfangswand mehrteilig zu gestalten bzw. aus mehreren nebeneinander (bevorzugt in Umfangsrichtung um die Dosierkammerachse und/oder axial entlang der Dosierkammerachse nebeneinander bevorzugt aneinander) angeordneten Teilen auszubilden, die bevorzugt lediglich abschnittsweise aneinander anliegen und die Ansaugöffnungen zwischen diesen Dosierkammerumfangswandteilen (insbesondere in dem mindestens einen Nicht-Anlagebereich) zu realisieren, was insbesondere vorteilhaft ist für schlitzförmige (langgestreckte) Ansaugöffnungen, hierauf jedoch nicht beschränkt ist. Beim Vorsehen mehrerer Dosierkammerumfangswandteilen kann nämlich mindestens eines der Dosierkammerumfangswandteile an einer im montierten Zustand einem weiteren Dosierkammerumfangsteil gegenüberliegenden Seite, insbesondere einer Umfangsseite oder Axialseite, beispielsweise mechanisch durch Materialabtrag bzw. Materialentfernung bearbeitet werden, so dass sich im montierten Zustand zwischen den mindestens zwei Dosierkammerumfangswandteilen die gewünschte, insbesondere schlitzförmige Ansaugöffnung ergibt, da die benachbarten Dosierkammerumfangswandteile aufgrund der Materialentfernung nicht mehr vollflächig aneinander anliegen, sondern insbesondere abschnittsweise zwischen diesen jeweils eine Ansaugöffnung begrenzt ist. Grundsätzlich reicht eine entsprechende Bearbeitung eines der Dosierkammerumfangswandteile aus, wobei es alternativ auch möglich ist, die Dosierkammerumfangswandteile an den im montierten Zustand einander zugewandten Flächen (die ohne die Bearbeitung plan aufeinanderliegen würden) zur Ausbildung der Ansaugöffnungen zu bearbeiten. Ganz besonders bevorzugt ist es dabei, wenn durch das beschriebene Verfahren bzw. die beschriebene Ausgestaltung mindestens ein langgestreckter, sich axial parallel zur Dosierkammerachse erstreckender Ansaugöffnungsschlitz geschaffen wird, wobei alternativ auch mindestens ein sich in Umfangsrichtung erstreckender Schlitz axial zwischen zwei Dosierkammerumfangswandteilen realisiert werden kann oder ein sich winklig, gekrümmt oder gewendelt erstreckender Ansaugöffnungsschlitz.
Wie eingangs bereits angedeutet ist es ganz besonders bevorzugt, wenn die Befüll- und die Entleerungsöffnung der Dosierkammer von einer gemeinsamen, d.h. derselben Öffnung gebildet wird, die sich ganz besonders bevorzugt an einem unteren Ende der Dosierkammer befindet, d.h. vertikal nach unten orientiert.

Insgesamt hat die Ausbildung der Ansaugöffnungen zwischen jeweils zwei Umfangswandteilen den Vorteil, dass sich die Ansaugöffnungen einfach durch konventionelle Bearbeitungsmethoden, insbesondere spanabhebende Bearbeitungsmethoden, herstellen lassen und auch eine Demontage der Dosierkammerumfangswand möglich ist, um die Ansaugöffnungen nach einer bestimmten Betriebszeit intensiv, beispielsweise manuell, zu reinigen.
Eine schlitzförmige und/oder zwischen zwei Umfangswandteilen gebildete Ausgestaltung der Ansaugöffnungen hat darüber hinaus den Vorteil einer guten Reinigbarkeit und Sterilisierbarkeit, beispielsweise mit Dampf und/oder Wasserstoffperoxid. Zudem besteht bei schlitzförmigen Ansaugöffnungen eine geringere Neigung aufgrund von Kapillarwirkungen flüssiges Sterilisations- oder Reinigungsfluid zurückzuhalten.

Wie ebenfalls eingangs bereits angedeutet ist es besonders bevorzugt, wenn zum Auswerfen des Pulvers, d.h. zum Entleeren der Dosierkammer, ein Auswurfstempel vorgesehen ist, der mittels eines Antriebs relativ zur Dosierkammerumfangswand verstellbar ist und zwar durch aktives Verstellen des Auswurfstempels und/oder der Umfangswand. Bevorzugt wird auf einen bisher in der Regel eingesetzten Auswurf bzw. eine Entleerung mit Druckluft, d.h. ein Ausblasen, verzichtet, da dies die hier interessierenden geringen Mengen bzw. Volumina zu arg verstreuen könnte. Bei Bedarf kann der Auswurfstempel nach einem Befüllvorgang und vor einem Entleerungsvorgang zur Kompaktierung des zu dosierenden Pulvers eingesetzt werden.
Um eine automatisierte, insbesondere regelmäßige Reinigung der Ansaugöffnungen vor evtl. anhaftendem bzw. darin verkeiltem Pulver zu ermöglichen, ist in Weiterbildung der Erfindung mit Vorteil vorgesehen, mindestens zwei, bevorzugt jedoch nicht zwingend einander diametral gegenüberliegende Ansaugöffnungen vorzusehen, die nacheinander, insbesondere unabhängig voneinander mit Unterdruck beaufschlagbar sind, ganz besonders bevorzugt wechselseitig, um durch Verbindung einer der Ansaugöffnungen mit einer Unterdruckquelle die mindestens eine weitere (bevorzugt an ein höheres Druckniveau, insbesondere Atmosphärendruck angeschlossene) Ansaugöffnung durch Heraussaugen von Pulverresten in die Dosierkammer hinein freizuspülen. Dabei sind den mindestens zwei Ansaugöffnungen Ventilmittel zugeordnet, mit denen die Ansaugöffnungen zu unterschiedlichen Zeitpunkten mit mindestens einer Unterdruckquelle und/oder einem höheren Druckniveau verbindbar sind. Je nach Ausgestaltung des Reinigungsschrittes kann dieser beim gleichzeitigen Befüllen der Unterdruckkammer mit Pulver erfolgen, also derart, dass gleichzeitig durch die Verbindung einer der Ansaugöffnungen mit einer Unterdruckquelle Pulver aus der Befüllöffnung oder zumindest die Befüllöffnung geöffnet ist angesaugt und gleichzeitig Pulverreste aus einer weiteren der Ansaugöffnung zur gleichen Zeit abgesaugt werden, wobei dann bevorzugt die freizuspülende Ansaugöffnung mit einem höheren Druckniveau verbunden ist. Alternativ ist es möglich, den Reinigungsschritt vor und/oder nach einer Befüllung vorzunehmen, also bei geschlossener und/oder nicht mit einem Pulvervorrat verbundener Befüllöffnung. Ganz besonders bevorzugt ist es, wenn eine der Ansaugöffnungen nach einem Befüllvorgang, d.h. nach einer Verbindung zur Unterdruckquelle, auf die zuvor beschriebene Weise, d.h. durch die zuvor beschriebene Verfahrensweise freigespült wird, bevor sie für einen weiteren Befüllvorgang erneut mit der Unterdruckquelle verbunden wird.

Ganz besonders bevorzugt wird die erfindungsgemäße Dosiervorrichtung wie folgt betrieben:
Zunächst wird Pulver durch die, bevorzugt gemeinsame, Befüll- und Entleerungsöffnung angesaugt, wobei die Unterdruckversorgung durch umfangswandseitige Ansaugöffnungen erfolgt. Ganz besonders bevorzugt erfolgt die Unterdruckbeaufschlagung nur durch einen Teil, insbesondere die Hälfte, der vorgesehenen Ansaugöffnungen.
Daraufhin erfolgt eine fakultative Komprimierung mittels eines fakultativen Auswurfstempels und dann das Auswerfen der Pulverportion, insbesondere mittels des Auswurfstößels. Vor einem nächsten Dosierschritt erfolgt nun bevorzugt ein Freispülen der in einem vorhergehenden Dosiervorgang, insbesondere im letzten Dosiervorgang noch mit Unterdruck beaufschlagten Ansaugöffnungen, indem eine andere der Ansaugöffnungen mit Unterdruck verbunden wird. Dieser Freispülvorgang kann vor dem nächsten Befüllvorgang und/oder zumindest teilweise überlappend während des nächsten Befüllvorgangs durchgeführt werden. Bevorzugt wird die mindestens eine freizuspülende Ansaugöffnung während dieses Freispülvorgangs mit einem höheren Druckniveau (als das Unterdruckniveau) verbunden, insbesondere mit der Atmosphäre. Bevorzugt erfolgt das Freispülen von Ansaugöffnungen wechselseitig.
Weitere Vorteile, Merkmale und Einzelheiten der Erfindung ergeben sich aus der nachfolgenden Beschreibung bevorzugter Ausführungsbeispiele sowie anhand der Zeichnungen.
Diese zeigen in:
- Fig. 1:: eine Explosionsdarstellung einiger Komponenten einer erfindungsgemäßen Kleinstmengen-Dosiervorrichtung,
- Fig. 2a-h:: unterschiedliche Betriebszustände einer erfindungsgemäßen Kleinstmengen-Pulverdosiervorrichtung,
- Fig. 3:: die Darstellung eines bevorzugten Ausführungsbeispiels eines Dosierkammerumfangswandteils sowie zwei vergrößerte Detaildarstellungen,
- Fig. 4:: zwei alternative Ausgestaltungsvarianten von Dosierkammerumfangswänden.

In den Figuren sind gleiche Elemente und Elemente mit der gleichen Funktion mit den gleichen Bezugszeichen gekennzeichnet.

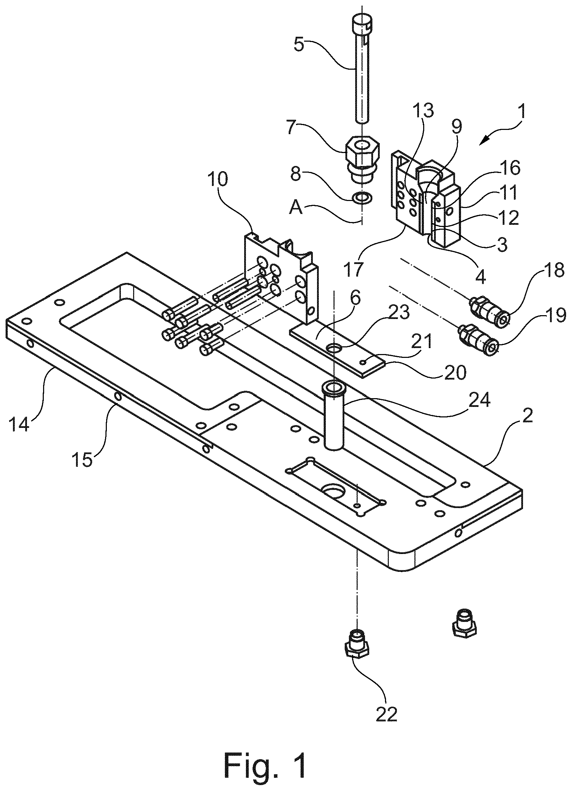

In Fig. 1 sind einige Komponenten einer nach dem Konzept der Erfindung ausgebildeten Kleinmengen-Dosiervorrichtung 1 (im Folgenden Dosiervorrichtung 1) gezeigt.

Die Dosiervorrichtung 1 umfasst eine Trägerplatte 2, auf welcher eine Dosierkammer 3 angeordnet ist. Diese umfasst eine hier untere gemeinsame Befüll- und Entleerungsöffnung 4. Gegenüberliegend der Befüll- und Entleerungsöffnung 4 der hohlzylindrischen Dosierkammer 3 ragt in diese, d.h. in der Zeichnung hier von oben, ein Auswurfstempel 5 hinein, welcher beispielsweise hydraulisch, pneumatisch oder elektromotorisch axial entlang einer senkrecht auf der Befüll- und Entleerungsöffnung 4 stehenden Dosierkammerachse A verstellbar ist, um Pulver aus der Dosierkammer 3 heraus zu befördern und um fakultativ, wie später noch erläutert wird, in einem Komprimierungsschritt Pulver zu komprimieren. Der Auswurfstempel 5 begrenzt die Dosierkammer unmittelbar axial nach oben - ein axiales Filterelement ist nicht vorgesehen.

Der Auswurfstempel 5 ist in einem Führungselement 7 geführt, welches oberhalb der Dosierkammer angeordnet ist - je nach Auswurfstempelstellung hat die Dosierkammer ein anderes (einstellbares) Dosierkammervolumen. Zu erkennen ist zudem eine Elastomerdichtung 8, um das Führungselement 7 gegenüber der Dosierkammer 3 abzudichten.

Aus Fig. 1 ist weiterhin zu erkennen, dass die Dosierkammer 3 radial bezogen auf die Dosierkammerachse A außen in Umfangsrichtung von einer Umfangswand 9 begrenzt ist, die eine innenkreiszylindrische Dosierkammerinnenmantelfläche begrenzt. Diese Umfangswand 9 ist in dem gezeigten Ausführungsbeispiel gebildet von zwei Umfangswandteilen 10, 11, die in dem konkreten Ausführungsbeispiel plattenförmig ausgebildet sind und unter Begrenzung von zwei diametral gegenüberliegenden schlitzförmigen Ausbau-Ansaugöffnungen 12, 13 aneinander anliegen und aneinander mit Hilfe von Schrauben 14, 15 lösbar fixierbar sind.

In einem Bereich radial hinter jeder Ansaugöffnung 12, 13 befindet sich eine in jeweils einem Umfangswandteil 10, 11 ausgebildete Ansaugkammer 16, 17, wobei die Ansaugkammern 16, 17 über Anschlüsse 18, 19 wechselseitig mit einer nicht gezeigten Unterdruckquelle und/oder einem höheren Druckniveau verbindbar sind, nämlich zu Befüll- und/oder Freispülzwecken, wie später noch erläutert werden wird.

Unter der Dosierkammer 3 befindet sich dem Auswurfstempel 5 gegenüberliegend eine Gleitplatte 20, auf der die Dosierkammer 3 zwischen einer Befüllposition, einer fakultativen Kompressionsposition und einer Entleerungsposition verstellbar ist. In der Gleitplatte 20 befindet sich eine Versorgungsöffnung 21 für Pulver, die mit einem Pulverversorgungsanschluss 22 fluchtet. Diese Versorgungsöffnung 21 definiert eine Befüllposition, während eine Entsorgungsöffnung 23 mit zugeordneter Entleerungsführung 24 eine Entleerungsposition definiert. Zwischen diesen Positionen befindet sich die fakultative Kompressionsposition 6, in der die Befüll- und Entleerungsöffnung 4 geschlossen ist, indem sie sich auf einen in einem Bereich zwischen der Versorgungsöffnung 21 und der Entsorgungsöffnung 23 befindet.

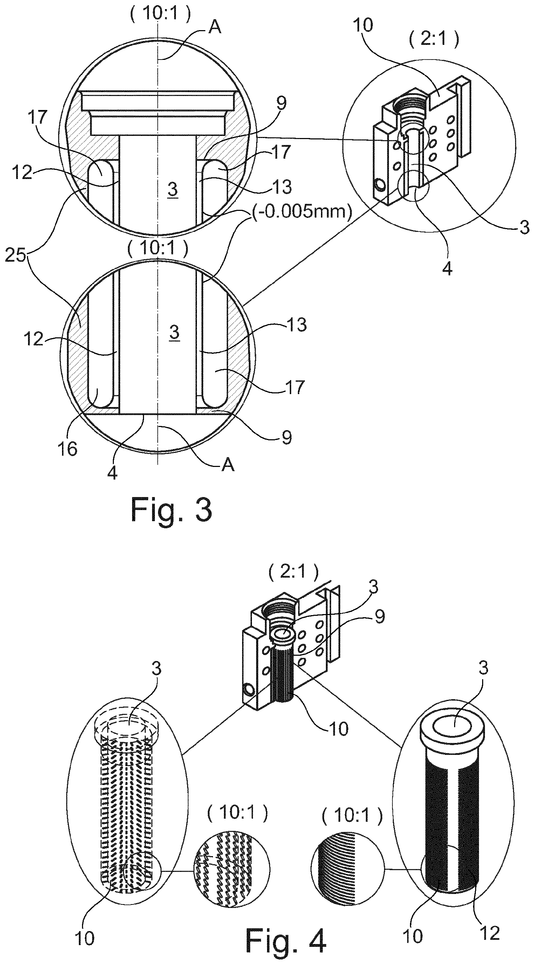

Zum besseren Verständnis des Aufbaus der Dosierkammer wird auf Fig. 3 verwiesen. Hier ist exemplarisch in der Zeichnungsebene rechts eines der Umfangswandteile 10 mit, hier beispielhaft hälftiger, Dosierkammer 3 gezeigt. In diese ragt, nicht dargestellt, von oben der Auswurfstempel hinein, während sich unten die gemeinsame Befüll- und Entleerungsöffnung befindet.

Aus den vergrößerten Darstellungen in der Zeichnungsebene links ergibt sich nun die Gestaltung der Ansaugöffnungen. Diese sind bezogen auf ein Kontakt- bzw. Anlageniveau 25, an dem sich die Umfangswandteile 10, 11 treffen bzw. aneinander anliegen, vertieft und zwar hier beispielhaft auf jedem Umfangswandteil 10, 11 (alternativ nur auf einem Umfangswandteil) um 5µm, so dass sich vorliegend eine senkrecht zur Zeichnungsebene gemessene lichte Weite der Ansaugöffnungen von 10µm) ergibt, während die in der Zeichnung von unten nach oben gemessene Längserstreckung der jeweiligen Ansaugöffnung ein Vielfaches, hier weit über das Tausendfache, beträgt. Die lichte Weite ist hier senkrecht zur Längserstreckung und senkrecht zur Radialerstreckung der Ausgangsöffnung orientiert.

Zu erkennen ist in einem jeweiligen Bereich radial außerhalb jeder Ansaugöffnung 12, 13 die zugehörige Ansaugkammer 16, 17, die durch entsprechende Ventilstellungen alternativ mit Unterdruck oder einem höheren Druckniveau, beispielsweise Atmosphärendruck, verbindbar sind. Zu erkennen ist, dass sich in dem konkreten Ausführungsbeispiel die schlitzförmigen Ansaugöffnungen in axialer Richtung, d.h. parallel zur Dosierkammerachse A, erstrecken und zwar über den Großteil der Erstreckung der Dosierkammer in dieser Richtung.
In der Fig. 4 sind beispielhaft alternative Ausgestaltungsvarianten von Ansaugöffnungen 10 in der Umfangswand der Dosierkammer 3 gezeigt, hier beispielhaft an einteiligen Umfangswandgestaltungen, wobei auch hier mehrteilige Ausführungen, beispielsweise analog zu Fig. 3, realisierbar sind. So ist in der Zeichnungsebene gemäß Fig. 4 rechts eine Anzahl von abschnittsweise in Umfangsrichtung verlaufenden Ansaugöffnungen bzw. -schlitzen gezeigt, die in zwei Gruppen unterteilt sind, die wechselseitig mit Unterdruck verbindbar sind.

In Fig. 4 rechts befindet sich ein Ausführungsbeispiel mit im Vergleich zu schlitzförmigen Ausgestaltungen eher punktförmigen Realisierungen von Ansaugöffnungen. Hier ist die lichte Weite von beispielhaft 10 µm der Öffnungsdurchmesser. Weitere alternative Ausgestaltungsformen sind realisierbar.

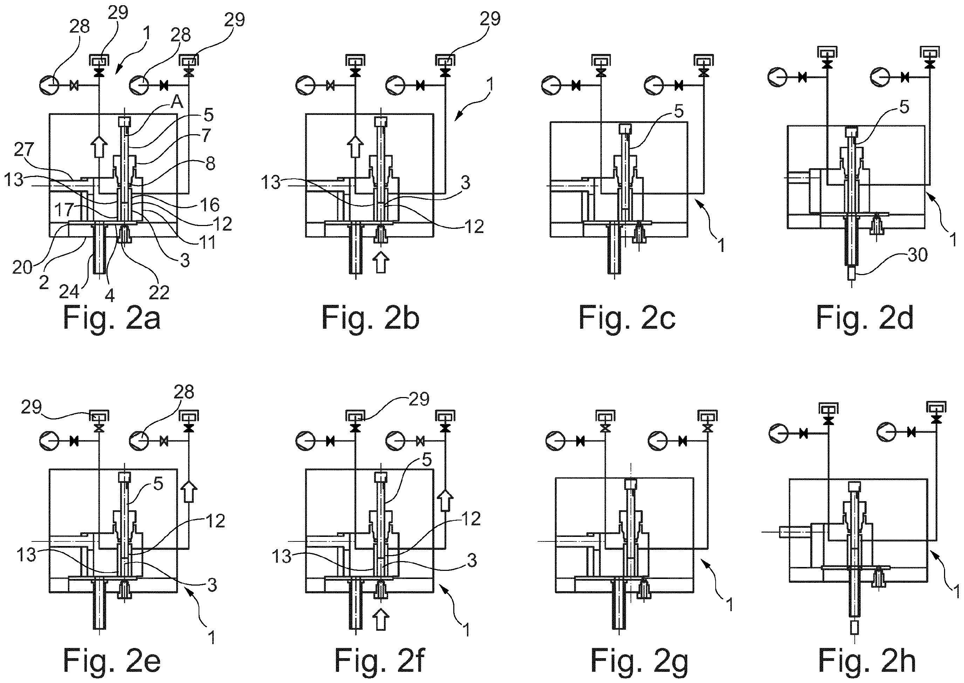

Im Folgenden wird anhand der Fig. 2a bis 2h eine bevorzugte Funktionsweise geschildert, wobei die nicht ausgefüllten Ventile geöffnet sind und die jeweils ausgefüllten Ventildarstellungen geschlossen.

Der Aufbau der in sämtlichen Darstellungen identischen Kleinstmengen-Dosiervorrichtung 1 ist immer gleich und entspricht der Explosionsdarstellung gemäß Fig. 1. Zu erkennen ist zusätzlich ein Verstellbolzen 27, über welchen die Dosierkammer 3 mittels eines entsprechenden Antriebs zwischen einer Befüllposition, einer Kompaktierposition (Kompressionposition) und einer Entleerungsposition in der Zeichnungsebene von rechts nach links und zurück verstellbar ist. Die Verstellrichtung verläuft senkrecht zu der Dosierkammerachse A. Aus Übersichtlichkeitsgründen wurden die meisten Bezugszeichen lediglich in Fig. 2a eingezeichnet.

Zu erkennen ist eine Unterdruckquelle 28, hier in Form einer Vakuumpumpe. Eingezeichnet sind zwei Vakuumpumpen, wobei grundsätzlich auch das Vorsehen einer einzigen Vakuumpumpe zum abwechselnden Versorgen der unterschiedlichen Ansaugöffnungen oder Ausgangsöffnungsgruppen ausreichend ist. Zudem ist zu erkennen ein erhöhtes Druckniveau 29, d.h. ein Entlastungsanschluss, der, wie später noch erläutert werden wird, vorteilhaft ist für ein Freispülen der Ansaugöffnungen.

In dem Betriebszustand gemäß Fig. 2a befindet sich die Dosierkammer 3 in der Befüllposition, d.h. oberhalb der Versorgungsöffnung 21 bzw. oberhalb des Pulverversorgungsanschlusses 22. In dem Zustand gemäß Fig. 1 ist die in der Zeichnungsebene linke Ansaugöffnung 13 mit der Vakuumquelle 28 verbunden (siehe geöffnetes Ventil), während die weitere in der Zeichnungsebene rechte Ansaugöffnung 12 an das höhere Druckniveau 29 angeschlossen ist. In diesem Zeitpunkt wird bei der gezeigten Ventilstellung die in der Zeichnungsebene rechte Ansaugöffnung 12 freigespült, d.h. darin anhaftendes Pulver wird in die Dosierkammer 3 gesaugt. Alternativ ist es möglich, diesen Freispülvorgang bei geschlossener Befüll- und Entleerungsöffnung 4 durchzuführen.

Bei der Darstellung gemäß Fig. 2b ist nun die schlitzförmige Ansaugöffnung 12 nicht mehr mit höherem Druckniveau 29 verbunden, jedoch die in der Zeichnungsebene linke Ansaugöffnung 13 weiterhin mit der Vakuumquelle, so dass nun, angedeutet durch den in der Zeichnungsebene unteren Pfeil, Pulver von unten in die Dosierkammer 3 gelangt. Nach dem Befüllen wird die Dosierkammer 3, wie sich aus Fig. 2c ergibt, in die Komprimierposition 6 verfahren und der Auswurfstempel 5 wird zur Kompaktierung des in der Dosierkammer befindlichen Pulvers nach unten bewegt. Während dieser Kompaktierung sind die Ansaugöffnungen 12, 13 entlüftet bzw. mit dem höheren Druckniveau verbunden, so dass kein weiteres Ansaugen erfolgt. In Fig. 2d ist der Komprimierungsvorgang abgeschlossen und die Dosierkammer 3 wurde weiter in der Zeichnungsebene nach links in die Entleerungsposition bewegt und der Auswurfstempel 5 nach unten bewegt und somit die Kammer entleert. Das komprimierte Pulvervolumen 30 befindet sich bei der Darstellung gemäß Fig. 2d im komprimierten Zustand in der Zeichnungsebene unten.

In der Darstellung gemäß Fig. 2e ist die Dosierkammer 3 wieder zur Befüllposition verstellt. Nun ist die in der Zeichnungsebene rechts befindliche Ansaugöffnung 12 mit der Unterdruckquelle 28 verbunden (und nicht mit dem höheren Druckniveau), während die gegenüberliegende Ansaugöffnung 13 mit dem höheren Druckniveau 29 verbunden ist, so dass nun die in der Zeichnungsebene linke Ansaugöffnung 13 in die Dosierkammer 3 hinein freigespült wird. Nach diesem Freispülvorgang wird, wie aus Fig. 2f ersichtlich ist, die Verbindung zwischen der Ansaugöffnung 13 und dem höheren Druckniveau 29 geschlossen, so dass nun von unten Pulver in die Dosierkammer 3 über die Ansaugöffnung 12 angesaugt wird. In Fig. 2g ist dann der Komprimierungsschritt analog zu Fig. 2c gezeigt und in Fig. 2h der Entleerungsschritt analog zu Fig. 2d. Nun schließen die Betriebszustände wieder ausgehend von Fig. 2a an.

### Bezugszeichenliste

- 1: Kleinstmengen-Pulverdosiervorrichtung
- 2: Trägerplatte
- 3: Dosierkammer
- 4: (gemeinsame) Befüll- und Entleerungsöffnung
- 5: Auswurfstempel
- 6: Kompressions- bzw. Kompaktierposition
- 7: Führungselement
- 8: Elastomerdichtung
- 9: (Dosierkammer-)Umfangswand
- 10: (Dosierkammer-)Umfangswandteil
- 11: (Dosierkammer-)Umfangswandteil
- 12: Ansaugöffnung
- 13: Ansaugöffnung
- 14: Schrauben
- 15: Schrauben
- 16: Ansaugkammer
- 17: Ansaugkammer
- 18: Anschluss
- 19: Anschluss
- 20: Gleitplatte
- 21: Versorgungsöffnung
- 22: Pulverversorgungsanschluss
- 23: Entsorgungsöffnung
- 24: Entleerungsführung
- 25: Anlageniveau
- 27: Verstellbolzen
- 28: Vakuumquelle
- 29: erhöhtes Druckniveau
- 30: komprimiertes Pulvervolumen
- A: Dosierkammerachse

## Patentansprüche

1. Kleinstmengen-Pulverdosiervorrichtung (1), insbesondere für pharmazeutische oder chemische Anwendungen, rausgeführt zum Dosieren von Pulvervolumina von kleiner als 1 cm³, umfassend eine von einer Umfangswand (9) begrenzte Dosierkammer (3) mit einem Dosierkammervolumen von weniger als 1cm³, die zum Befüllen der Dosierkammer (3) mit zu dosierendem Pulver mit einer Unterdruckquelle (28) zum Ansaugen des Pulvers verbindbar ist, wobei der Dosierkammer (3) Filtermittel zum Zurückhalten von Pulver in der Dosierkammer (3) bei einem Ansaugvorgang zugeordnet sind,
**dadurch gekennzeichnet,**
**dass** die Filtermittel, von der Umfangswand (9) gebildet werden, wobei die Filtermittel in der Umfangswand (9) ausgebildete Ansaugöffnungen (12, 13) umfassen, durch die hindurch die Dosierkammer (3) mit Unterdruck beaufschlagbar ist.

2. Kleinstmengen-Pulverdosiervorrichtung (1) nach Anspruch 1,
**dadurch gekennzeichnet,**
**dass** das Dosierkammervolumen weniger als 500mm³, noch weiter bevorzugt weniger als 200mm³, ganz besonders bevorzugt weniger als 150mm³, noch weiter bevorzugt weniger als 100mm³, noch weiter bevorzugt weniger als 50mm³, ganz besonders bevorzugt zwischen 0,1mm³ und 150mm³, besonders bevorzugt zwischen 0,1mm³ und 100mm³, besonders bevorzugt zwischen 0,1mm³ und 50mm³ beträgt, weiter bevorzugt zwischen 0,1mm³ und 10mm³, weiter bevorzugt zwischen 0,1mm³ und 1mm³, noch weiter bevorzugt zwischen 0,1mm³ und 0,4mm³ und/oder auf ein solches Dosierkammervolumen, insbesondere über einen über Steuermittel antreibbaren Volumenbegrenzungsantriebs oder manuelle Verstellmittel, begrenzbar ist.

3. Kleinstmengen-Pulverdosiervorrichtung (1) nach einem der Ansprüche 1 oder 2,
**dadurch gekennzeichnet,**
**dass** die Ansaugöffnungen (12, 13) eine freie Querschnittsfläche aufweisen, deren lichte Weite in zumindest einer Dimension, bevorzugt ausschließlich in einer Dimension, 50µm oder weniger beträgt, oder bevorzugt 30µm oder weniger beträgt, bevorzugt 20µm oder weniger beträgt, ganz besonders bevorzugt gewählt ist aus einem Wertebereich zwischen 1µm und 20µm, noch weiter bevorzugt zwischen 0,1µm und 20µm, noch weiter bevorzugt zwischen 1µm und 10µm, noch weiter bevorzugt zwischen 0,1µm und 10µm, noch weiter bevorzugt zwischen 1µm und 5µm, noch weiter bevorzugt zwischen 0,1µm und 5µm.

4. Kleinstmengen-Pulverdosiervorrichtung (1) nach einem der vorhergehenden Ansprüche,
**dadurch gekennzeichnet,**
**dass** die Ansaugöffnungen (12, 13) schlitzförmig ausgebildet sind, bevorzugt derart, dass eine Schlitzlängenerstreckung mindestens 100-mal, bevorzugt mindestens 1000-mal größer ist als eine senkrecht hierzu gemessene Schlitzbreitenerstreckung.

5. Kleinstmengen-Pulverdosiervorrichtung (1) nach einem der vorhergehenden Ansprüche,
**dadurch gekennzeichnet,**
**dass** sich die schlitzförmigen Ansaugöffnungen (12, 13) über mindestens 50%, bevorzugt über mindestens 80% einer Dosierkammerlängserstreckung erstrecken.

6. Kleinstmengen-Pulverdosiervorrichtung (1) nach einem der vorhergehenden Ansprüche,
**dadurch gekennzeichnet,**
**dass** die Dosierkammerumfangswand (9) mehrteilig ausgebildet ist und mehrere Dosierkammerumfangswandteile umfasst, und dass die Ansaugöffnungen (12, 13) zwischen jeweils zwei der Dosierkammerumfangswandteile (10, 11) ausgebildet sind.

7. Kleinstmengen-Pulverdosiervorrichtung (1) nach Anspruch 6,
**dadurch gekennzeichnet,**
**dass** die Ansaugöffnungen (12, 13) durch Ausbilden mindestens einer vor der Montage der Dosierkammerumfangswand (9) in einer senkrecht zu einer Unterdruckbeaufschlagungsrichtung orientierten Richtung offene Vertiefung in mindestens einem der Dosierkammerumfangswandteilen (10, 11) ausgebildet sind.

8. Kleinstmengen-Pulverdosiervorrichtung (1) nach einem der vorhergehenden Ansprüche,
**dadurch gekennzeichnet,**
**dass** die Dosierkammer (3) eine gemeinsame, bevorzugt nach unten orientierte, Befüll- und Entleerungsöffnung (4) aufweist, die bevorzugt zwischen einer Befüllposition und einer Entleerungsposition mittels eines Verstellantriebs verstellbar ist.

9. Kleinstmengen-Pulverdosiervorrichtung (1) nach einem der vorhergehenden Ansprüche,
**dadurch gekennzeichnet,**
**dass** zum Entleeren des zu dosierenden Pulvervolumens aus der Dosierkammer (3) ein in der Dosierkammer (3) verstellbarer Auswurfstempel (5) vorgesehen ist.

10. Kleinstmengen-Pulverdosiervorrichtung (1) nach einem der vorhergehenden Ansprüche,
**dadurch gekennzeichnet,**
**dass** die Ansaugöffnungen (12, 13) über Ventilmittel derart mit Unterdruck versorgbar sind, dass durch Unterdruckbeaufschlagung zumindest einer der Ansaugöffnungen (12, 13) mindestens eine andere der Ansaugöffnungen (12, 13) in die Dosierkammer (3) hinein freispülbar ist.

11. Kleinstmengen-Pulverdosiervorrichtung (1) nach Anspruch 10,
**dadurch gekennzeichnet,**
**dass** die Ventilmittel derart über Steuermittel ansteuerbar sind, dass die Ansaugöffnungen (12, 13) mit einem über dem Unterdruckniveau liegenden höheren Druckniveau (29), insbesondere Atmosphärendruck, verbindbar sind, derart, dass die mindestens eine freizuspülende der Ansaugöffnungen (12, 13) mit dem höheren Druckniveau (29) verbunden ist, während die mindestens eine andere der Ansaugöffnungen (12, 13) mit Unterdruck beaufschlagt ist.

12. Verfahren zum Dosieren von Pulver-Kleinstmengen, bevorzugt mit einem mittleren Partikelgrößendurchmesser x_{50,3}<50µM, bevorzugt von Pharmazeutika, unter Verwendung einer Kleinstmengen-Pulverdosiervorrichtung (1) nach einem der vorhergehenden Ansprüche, wobei eine ein Dosierkammervolumen von weniger als 1cm³ aufweisende Dosierkammer (3) mit zu dosierendem Pulver befüllt wird, in dem die Dosierkammer (3) mit Unterdruck beaufschlagt wird, wobei die Unterdruckbeaufschlagung durch Filtermittel hindurch erfolgt, um mittels diesen Pulver in der Dosierkammer (3) zurückzuhalten,
**dadurch gekennzeichnet,**
**dass** die Filtermittel von der Umfangswand (9) gebildet werden, wobei die Filtermittel in der Umfangswand (9) ausgebildete Ansaugöffnungen (12, 13) umfassen, durch die hindurch die Dosierkammer (3) mit Unterdruck beaufschlagt wird, insbesondere derart, dass dabei mittels der mindestens einen Ansaugöffnung (12, 13) mindestens 90 Gew-%, bevorzugt mindestens 95 Gew-%, noch weiter bevorzugt mindestens 99 Gew-% der angesaugten Pulverpartikel bei einem Befüllvorgang der Dosierkammer (3) in der Dosierkammer (3) zurückgehalten werden.

13. Verfahren nach Anspruch 12,
**dadurch gekennzeichnet, dass** zumindest eine der Ansaugöffnungen (12, 13) durch Unterdruckbeaufschlagung einer anderen der Ansaugöffnungen (12, 13) in die Dosierkammer (3), bevorzugt wechselseitig, freigespült wird.

14. Verfahren nach Anspruch 13,
**dadurch gekennzeichnet,**
**dass** die mindestens eine freizuspülende der Ansaugöffnungen (12, 13) zumindest während eines Zeitabschnitts einer Freispülzeitspanne mit einem höheren Druckniveau (29), insbesondere Atmosphärendruck, verbunden ist als die mindestens eine mit Unterdruck versorgte der Ansaugöffnungen (12, 13).

## Claims

1. A minimal-amount powder metering device (1), in particular for pharmaceutical or chemical applications, for metering powder volumes of less than 1 cm³, comprising a metering chamber (3) which is delimited by a surrounding wall (9) and which has a metering-chamber volume of less than 1 cm³ and which can be connected to a vacuum source (28) for suctioning powder in order to fill the metering chamber (3) with powder to be metered, filter means for retaining powder in the metering chamber (3) during a suctioning process being associated with the metering chamber (3),
**characterized in that**
the filter means are formed by the surrounding wall (9), the filter means comprising suction openings (12, 13) which are formed in the circumferential wall (9) and through which a vacuum can be applied to the metering chamber (3).

2. The minimal-amount powder metering device (1) according to claim 1,
**characterized in that**
the metering-chamber volume is less than 500 mm³, even more preferably less than 200 mm³, particularly preferably less than 150 mm³, even more preferably less than 100 mm³, even more preferably less than 50 mm³, particularly preferably between 0.1 mm³ and 150 mm³, especially preferably between 0.1 mm³ and 100 mm³, especially preferably between 0.1 mm³ and 50 mm³, more preferably between 0.1 mm³ and 10 mm³, more preferably between 0.1 mm³ and 1 mm³, even more preferably between 0.1 mm³ and 0.4 mm³ and/or can be limited to such a metering-chamber volume, in particular via a volume limitation drive driven by control means or via manual displacement means.

3. The minimal-amount powder metering device (1) according to any one of claims 1 or 2,
**characterized in that**
the suction openings (12, 13) have a free cross-sectional area whose clearance, in at least one dimension, preferably in no more than one dimension, is 50 µm or less, or preferably 30 µm or less, preferably 20 µm or less, is particularly preferably selected from a value range of between 1 µm and 20 µm, even more preferably between 0.1 µm and 20 µm, even more preferably between 1 µm and 10 µm, even more preferably between 0.1 µm and 10 µm, even more preferably between 1 µm and 5 µm, even more preferably between 0.1 µm and 5 µm.

4. The minimal-amount powder metering device (1) according to any one of the preceding claims,
**characterized in that**
the suction openings (12, 13) are formed in the shape of a slit, preferably in such a manner that a length of the slit is at least 100 times, preferably at least 1000 times greater than a width of the slit measured perpendicular thereto.

5. The minimal-amount powder metering device (1) according to any one of the preceding claims,
**characterized in that**
the slit-shaped suction openings (12, 13) extend across at least 50 %, preferably across at least 80 % of a length of the metering chamber.

6. The minimal-amount powder metering device (1) according to any one of the preceding claims,
**characterized in that**
the metering-chamber surrounding wall (9) is formed in multiple parts and comprises multiple metering-chamber surrounding-wall parts, and that the suction openings (12, 13) are formed between two of the metering-chamber surrounding-wall parts (10, 11) in each case.

7. The minimal-amount powder metering device (1) according to claim 6,
**characterized in that**
the suction openings (12, 13) are formed by forming at least one recess in at least one of the metering-chamber surrounding-wall parts (10, 11), said recess being open in a direction oriented perpendicular to a vacuum application direction prior to the installation of the metering-chamber surrounding wall (9).

8. The minimal-amount powder metering device (1) according to any one of the preceding claims,
**characterized in that**
the metering chamber (3) has a joint filling and emptying opening (4) which is preferably oriented downward and which can preferably be displaced between a filling position and an emptying position by means of a displacement drive.

9. The minimal-amount powder metering device (1) according to any one of the preceding claims,
**characterized in that**
an ejection plunger (5) displaceable in the metering chamber (3) is provided for discharging the powder volume to be metered from the metering chamber (3).

10. The minimal-amount powder metering device (1) according to any one of the preceding claims,
**characterized in that**
a vacuum can be applied to the suction openings (12, 13) via valve means in such a manner that by applying the vacuum to at least one of the suction openings (12, 13), at least another one of the suction openings (12, 13) can be flushed into the metering chamber (3).

11. The minimal-amount powder metering device (1) according to claim 10,
**characterized in that**
the valve means can be controlled via control means in such a manner that the suction openings (12, 13) can be connected to a higher pressure level (29), in particular atmospheric pressure, above the vacuum level in such a manner that the at least one suction opening (12, 13) to be flushed is connected to the higher pressure level (29) while a vacuum is applied to the at least one other suction opening (12, 13).

12. A method for metering minimal amounts of powder, preferably having a mean particle diameter of x_{50.3} < 50 µm, preferably of pharmaceuticals, using a minimal-amount powder metering device (1) according to any one of the preceding claims, a metering chamber (3) having a metering-chamber volume of less than 1 cm³ being filled with powder to be metered by applying a vacuum to the metering chamber (3), the vacuum being applied through filter means so as to retain powder in the metering chamber (3) by means of said filter means,
**characterized in that**
the filter means are formed by the surrounding wall (9), the filter means comprising suction openings (12, 13) which are formed in the surrounding wall (9) and through which the vacuum is applied to the metering chamber (3) in such a manner in particular that at least 90 wt%, preferably at least 95 wt%, even more preferably at least 99 wt% of the suctioned powder particles are retained in the metering chamber (3) by means of the at least one suction opening (12, 13) during a filling process of the metering chamber (3).

13. The method according to claim 12,
**characterized in that**
at least one of the suction openings (12, 13) is flushed into the metering chamber (3) by the vacuum being applied to another one of the suction openings (12, 13), preferably in an alternating manner.

14. The method according to claim 13,
**characterized in that**
at least during part of a flushing interval, the at least one suction opening (12, 13) to be flushed is connected to a higher pressure level (29), in particular atmospheric pressure, than the at least one suction opening (12, 13) to which the vacuum is applied.

## Revendications

1. Dispositif de dosage de poudre en petites quantités (1), en particulier apte aux applications pharmaceutiques et chimiques, configuré pour doser des volumes de poudre inférieurs à 1 cm³, comprenant une chambre de dosage (3) qui est limitée par une paroi périphérique (9) et qui a un volume inférieur à 1 cm³ et qui peut être connectée à une source de dépression (28) pour l'aspiration de la poudre afin de remplir la chambre de dosage (3) de la poudre à doser, des moyens de filtrage destinés à retenir la poudre dans la chambre de dosage (3) lors d'une aspiration étant associés à la chambre de dosage (3),
**caractérisé en ce que**
les moyens de filtrage sont formés par la paroi périphérique (9), les moyens de filtrage comprenant des ouvertures d'aspiration (12, 13) formées dans la paroi périphérique (9), à travers lesquelles la chambre de dosage (3) peut être soumise à la dépression.

2. Dispositif de dosage de poudre en petites quantités (1) selon la revendication 1,
**caractérisé en ce que**
le volume de la chambre de dosage est inférieur à 500 mm³, de préférence inférieur à 200 mm³, de préférence extrêmement particulière inférieur à 150 mm³, de préférence encore inférieur à 100 mm³, de préférence encore inférieur à 50 mm³, de préférence extrêmement particulière entre 0,1 mm³ et 150 mm³, de préférence particulière entre 0,1 mm³ et 100 mm³, de préférence particulière entre 0,1 mm³ et 50 mm³, de préférence élevée entre 0,1 mm³ et 10 mm³, de préférence élevée entre 0,1 mm³ et 1 mm³, de préférence encore entre 0,1 mm³ et 0,4 mm³ et/ou peut être limité à un tel volume de chambre de dosage, particulièrement par un entraînement limitant le volume entraînable par des moyens de commande ou à l'aide des moyens de déplacement manuels.

3. Dispositif de dosage de poudre en petites quantités (1) selon l'une quelconque des revendications 1 ou 2,
**caractérisé en ce que**
les ouvertures d'aspiration (12, 13) ont une section transversale libre dont la largeur intérieure, dans au moins une dimension, de préférence dans une seule dimension, est 50 µm ou moins ou de préférence 30 µm ou moins, de préférence 20 µm ou moins, de préférence extrêmement particulière sélectionnée dans une plage de valeurs entre 1 µm et 20 µm, de préférence particulière entre 0,1 µm et 20 µm, de préférence particulière entre 1 µm et 10 µm, de préférence particulière entre 0,1 µm et 10 µm, de préférence particulière entre 1 µm et 5 µm, de préférence particulière entre 0,1 µm et 5 µm.

4. Dispositif de dosage de poudre en petites quantités (1) selon l'une quelconque des revendications précédentes,
**caractérisé en ce que**
les ouvertures d'aspiration (12, 13) sont formées en forme de fente, de préférence de telle manière qu'une longueur de fente est au moins 100 fois, de préférence au moins 1000 fois plus grande qu'une largeur de fente mesurée perpendiculairement à celle-ci.

5. Dispositif de dosage de poudre en petites quantités (1) selon l'une quelconque des revendications précédentes,
**caractérisé en ce que**
les ouvertures d'aspiration (12, 13) sous forme de fente s'étendent sur au moins 50 %, de préférence sur au moins 80 % d'une longueur de la chambre de dosage.

6. Dispositif de dosage de poudre en petites quantités (1) selon l'une quelconque des revendications précédentes,
**caractérisé en ce que**
la paroi périphérique (9) de la chambre de dosage se compose de plusieurs pièces et comprend plusieurs parties de paroi périphérique de chambre de dosage et que les ouvertures d'aspiration (12, 13) sont formées entre deux parties de paroi périphérique de chambre de dosage (10, 11) à chaque fois.

7. Dispositif de dosage de poudre en petites quantités (1) selon la revendication 6,
**caractérisé en ce que**
les ouvertures d'aspiration (12, 13) sont formées en formant un approfondissement dans au moins une des parties (10, 11) de la paroi périphérique de la chambre de dosage, ledit approfondissement étant ouvert dans une direction orientée perpendiculairement à une direction d'application de dépression avant le montage de la paroi périphérique (9) de la chambre de dosage.

8. Dispositif de dosage de poudre en petites quantités (1) selon l'une quelconque des revendications précédentes,
**caractérisé en ce que**
la chambre de dosage (3) a un orifice de remplissage et d'évacuation (4) en commune qui est orienté de préférence vers le bas et qui est déplaçable de préférence entre une position de remplissage et une position d'évacuation par un entraînement de déplacement.

9. Dispositif de dosage de poudre en petites quantités (1) selon l'une quelconque des revendications précédentes,
**caractérisé en ce qu'**
un piston d'éjection (5) déplaçable dans la chambre de dosage (3) est prévu pour l'évacuation du volume de poudre à doser de la chambre de dosage (3).

10. Dispositif de dosage de poudre en petites quantités (1) selon l'une quelconque des revendications précédentes,
**caractérisé en ce que**
les ouvertures d'aspiration (12, 13) peuvent être soumises à la dépression par des moyens de soupape de telle manière qu'en soumettant au moins une des ouvertures d'aspiration (12, 13) à la dépression, au moins une autre ouverture d'aspiration (12, 13) peut être rincée vers la chambre de dosage (3).

11. Dispositif de dosage de poudre en petites quantités (1) selon la revendication 10,
**caractérisé en ce que**
les moyens de soupape peuvent être commandés de telle manière par des moyens de commande que les ouvertures d'aspiration (12, 13) peuvent être connectées à un niveau de pression (29) supérieur au niveau de dépression, particulièrement à la pression atmosphérique, de telle manière qu'au moins l'ouverture d'aspiration (12, 13) qui doit être rincée soit connectée au niveau de pression supérieur tandis que l'au moins une autre ouverture d'aspiration (12, 13) soit soumise à la dépression.

12. Procédé de dosage de petites quantités de poudre, de préférence d'un diamètre moyen des particules x_{50,3} < 50 µm, de préférence des produits pharmaceutiques, utilisant un dispositif de dosage de poudre en petites quantités (1) selon l'une quelconque des revendications précédentes, une chambre de dosage (3) ayant un volume de chambre de dosage inférieur à 1 cm³ étant remplie de la poudre à doser en soumettant la chambre de dosage (3) à la dépression, l'application de dépression étant faite à travers des moyens de filtrage afin de retenir de la poudre dans la chambre de dosage (3),
**caractérisé en ce que**
les moyens de filtrage sont formés par la paroi périphérique (9), les moyens de filtrage comprenant des ouvertures d'aspiration (12, 13) qui sont formées dans la paroi périphérique (9) et à travers lesquelles la chambre de dosage (3) est soumise à la dépression, particulièrement de telle manière qu'au moins 90 % en poids, de préférence au moins 95 % en poids, de préférence encore plus grande au moins 99 % en poids des particules de poudre aspirées sont retenues par l'au moins une ouverture d'aspiration (12, 13).

13. Procédé selon la revendication 12,
**caractérisé en ce qu'**
au moins une des ouvertures d'aspiration (12, 13) est rincée dans la chambre de dosage (3) par l'application, de préférence réciproque, de la dépression à une autre ouverture d'aspiration (12, 13).

14. Procédé selon la revendication 13,
**caractérisé en ce que**
l'au moins une ouverture d'aspiration à rincer des ouvertures d'aspiration (12, 13) est connectée à un niveau de pression (29) plus élevé que l'au moins une ouverture d'aspiration (12, 13) soumise à la dépression, connectée particulièrement à la pression atmosphérique, au moins pendant une partie d'une période de rinçage.
